# FASCICULE DE BREVET EUROPEEN

(11) **EP 1 703 753 B1**
(45) Date de publication et mention de la délivrance du brevet: **30.05.2012**
(21) Numéro de dépôt: 06110949.2
(22) Date de dépôt: 10.03.2006
(51) Int. Cl.: H04W 16/18

(54) **Procédé d'analyse du fonctionnement d'un réseau de télécommunication mobile cellulaire**
Verfahren zur Betriebsanalyse eines zellularen Mobilfunknetzes
Method of analysing the operation of a cellular mobile telecommunications network

(30) Priorité: 17.03.2005 FR 0550689
(43) Date de publication de la demande: 20.09.2006
(73) Titulaire: Alcatel Lucent, 75007 Paris (FR)
(72) Inventeur: Houllier, Jean-Roch, 91240 Saint Michel sur Orge (FR); Brethereau, Alain, 78220 Viroflay (FR); De Mathan, Béatrix, 75016 Paris (FR); Mechaly, André, 94100 Saint Maur des Fosses (FR)
(74) Mandataire: El Manouni, Josiane

(56) Documents cités:
- EP-A- 0 431 956
- WO-A-02/43026
- US-A- 5 179 722
- US-A- 5 561 841

## Description

La présente invention concerne un procédé d'analyse du fonctionnement d'un réseau de télécommunication mobile cellulaire comportant un ensemble de cellules, chaque cellule étant associée à une station de base propre à communiquer avec au moins une station mobile présente dans la cellule, le procédé étant du type comportant :
a) le recueil pour chaque cellule, d'au moins une variable caractéristique du fonctionnement du réseau dans ladite cellule,
b) la fourniture de la ou chaque variable caractéristique en association avec la cellule de recueil.

Pour l'analyse et l'optimisation du fonctionnement d'un réseau de télécommunication mobile, il est connu d'utiliser des stations de travail permettant la visualisation d'une carte bidimensionnelle de la zone de couverture du réseau.

A cet effet, la station de travail comporte une base de données comprenant l'implantation réelle sur la zone de couverture de chaque station de base. Comme connu en soi, chaque station de base est associée à une cellule définissant une région élémentaire dans laquelle les stations mobiles sont en communication avec la station de base associée.

La base de données reçoit périodiquement, pour chaque cellule, une ou plusieurs variables caractéristiques du fonctionnement du réseau dans la cellule.

De préférence, ces variables caractéristiques sont connues à plusieurs instants successifs pour une même cellule.

La visualisation du réseau proposée par la station de base prévoit une représentation de chacune des cellules du réseau. Une ou plusieurs variables caractéristiques de chaque cellule est figurée graphiquement, par exemple à l'aide de couleurs et/ou de textures différentes représentant la valeur des variables caractéristiques à partir d'une échelle de couleur et/ou de texture prédéfinie. Ainsi, l'utilisateur peut, par simple examen visuel de la représentation du réseau, analyser simultanément l'état de fonctionnement d'un grand nombre de cellules à un instant donné et ainsi déceler certains dysfonctionnements du réseau, pour ultérieurement optimiser la configuration du réseau.

Le document EP-A-0431956 décrit un système dans lequel un outil d'évaluation dans une unité centrale d' « Operation & Maintenance » collecte des données de qualité, effectue tous les calculs analytiques et arithmétiques nécessaires, et fournit une représentation des caractéristiques de la couverture radio, grâce à laquelle l'opérateur du système peut diagnostiquer des problèmes de couverture et prendre des mesures correctrices nécessaires.

Le document US 5561841 décrit une méthode de création d'un modèle représentant un réseau radio cellulaire et son environnement radio sur sur une carte.

En pratique, on constate que l'analyse de telles représentations du réseau est relativement complexe, du fait des difficultés d'interprétation du très grand nombre de variables caractéristiques et de cellules figurant sur la représentation.

L'invention a pour but de proposer un procédé et une station de travail permettant l'analyse du fonctionnement d'un réseau de télécommunications qui facilitent le travail des opérateurs en charge de la configuration et/ou de l'optimisation du réseau.

A cet effet, l'invention a pour objet un procédé d'analyse du fonctionnement d'un réseau de télécommunication mobile cellulaire, du type précité,
caractérisé en ce que l'étape de fourniture comporte :
b1) la sélection sur une carte du réseau figurée à partir desdites cellules, d'un tracé d'observation cheminant sur la carte au travers de cellules adjacentes ; et
b2) la mise à disposition, suivant une représentation structurée, de la ou chaque variable caractéristique pour les seules cellules adjacentes traversées par ledit tracé d'observation, suivant l'ordre du tracé.

Suivant des modes particuliers de mise en oeuvre, le procédé comporte l'une ou plusieurs des caractéristiques suivantes :
- chaque cellule est un polygone issu d'un polygone de Voronoï défini comme la représentation dans l'espace dual de la partition de la zone de couverture du réseau par une triangulation de Delaunay effectuée à partir de l'implantation des stations de base ;
- pour chaque cellule, au moins deux variables caractéristiques sont recueillies et mises à disposition simultanément dans la même représentation structurée ;
- l'étape de recueil comporte une étape d'échantillonnage au cours du temps de la ou chaque variable caractéristique, et l'étape de mise à disposition comporte une étape de mises à disposition successives suivant une même représentation structurée de la ou chaque variable caractéristique à des instants d'échantillonnage successifs ;
- ladite représentation structurée comporte un graphique bidimensionnel, dont une des dimensions est représentative des cellules adjacentes dudit tracé et dont l'autre dimension est représentative de la ou chaque variable caractéristique ;
- ladite représentation structurée est un histogramme ;
- l'étape de recueil comporte une étape d'échantillonnage au cours du temps de la ou chaque variable caractéristique, et il comporte une étape de sélection d'une unique cellule d'analyse et une étape de mise à disposition de l'évolution au cours du temps, suivant une représentation structurée, d'au moins une variable caractéristique pour la seule cellule d'analyse sélectionnée.

L'invention a également pour objet une station de travail pour l'analyse du fonctionnement d'un réseau de télécommunication mobile cellulaire comportant un ensemble de cellules, chaque cellule étant associée à une station de base propre à communiquer au moins avec une station mobile présente dans la cellule, la station comportant :
a) des moyens de recueil pour chaque cellule, d'au moins une variable caractéristique du fonctionnement du réseau dans ladite cellule,
b) des moyens de fourniture de la ou chaque variable caractéristique en association avec la cellule de recueil,
   caractérisé en ce que les moyens de fourniture comportent :
   b1) des moyens de sélection sur une carte du réseau figurée à partir desdites cellules, d'un tracé d'observation cheminant sur la carte au travers de cellules adjacentes ; et
   b2) des moyens de mise à disposition, suivant une représentation structurée, de la ou chaque variable caractéristique pour les seules cellules adjacentes traversées par ledit tracé d'observation, suivant l'ordre du tracé.

Elle a enfin pour objet un programme d'ordinateur pour une station de travail comportant des moyens de mise à disposition d'informations comportant un jeu d'instructions pour l'exécution des étapes du procédé, lorsque ledit programme est exécuté par une station de travail.

L'invention sera mieux comprise à la lecture de la description qui va suivre, donnée uniquement à titre d'exemple, et faite en se référant aux dessins annexés, sur lesquels :
- la Figure 1 est une vue en perspective schématique d'une station de travail selon l'invention ;
- la Figure 2 est une vue schématique d'un agrandissement d'une carte affichée de la station de la Figure 1 ;
- la Figure 3 est, à titre d'exemple, un histogramme des valeurs de deux variables caractéristiques pour des cellules prises suivant un tracé d'observation ; et
- la Figure 4 est, à titre d'exemple, un graphique montrant l'évolution temporelle de deux variables caractéristiques du fonctionnement du réseau dans une cellule déterminée.

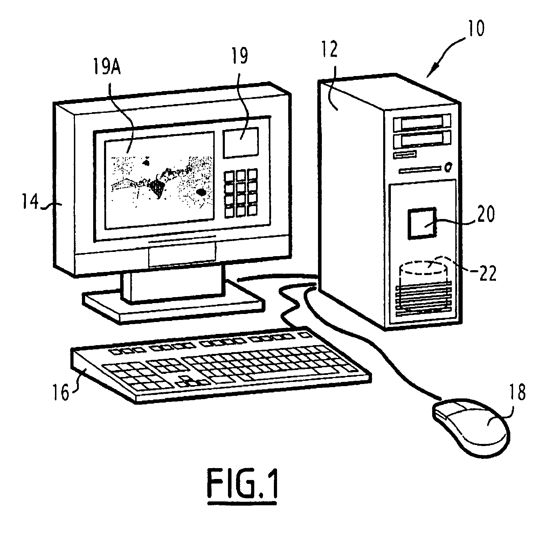

La station 10 illustrée sur la Figure 1 est destinée à l'analyse du fonctionnement et à l'optimisation d'un réseau de téléphonie mobile cellulaire.

Comme connu en soi, cette station de travail met en oeuvre un logiciel adapté pour la visualisation d'une carte représentant le réseau de téléphonie mobile étudié.

Ainsi, la station comporte une unité centrale de traitement d'informations 12, un écran d'affichage 14 et des moyens formant une interface homme/machine tel qu'un clavier 16, et/ou une souris 18 permettant la sélection de fonctions à partir d'une interface graphique 19 affichée sur l'écran 14. Les interfaces sont propres en particulier à assurer la sélection d'éléments graphiques sur l'affichage et la sélection d'un tracé d'observation sur la carte.

L'unité de traitement d'informations 12 comporte un processeur 20 permettant la mise en oeuvre d'un programme d'ordinateur assurant le traitement de données et la commande de l'affichage sur l'écran 14 à partir notamment des informations reçues du clavier 16 et/ou de la souris 18.

En outre, l'unité 12 comporte des moyens de stockage de données 22, tel qu'un disque dur sur lequel sont mémorisés une description d'une carte du réseau et le programme mis en oeuvre par la station de travail.

La description mémorisée d'une carte du réseau comporte notamment la position des stations de base implantées sur le territoire et propres à communiquer avec des stations mobiles.

Comme connu en soi, une cellule est définie pour chaque station de base. Cette cellule correspond à la région depuis laquelle chaque station mobile est en communication avec la station de base correspondante. Le contour de chaque cellule dépend de la configuration du réseau et notamment la configuration des stations de base.

De préférence, chaque cellule est définie graphiquement par un polygone de "Voronoï" qui est obtenu, comme connu en soi, en tant que représentation dans l'espace dual de la partition de la zone de couverture du réseau par une triangulation de Delaunay effectuée à partir de l'implantation des stations de base.

Ainsi, compte tenu de la densité des stations de base, les tailles et formes des polygones de Voronoï varient d'une région à l'autre de la zone de couverture du réseau. En outre, ils dépendent de certains critères géographiques de sorte qu'il peut s'agir de polygones issus de polygones de Voronoï en étant modifiés pour tenir compte de ces critères.

En variante, les polygones de Voronoï sont remplacés par un autre type de polygone représentant la zone de couverture de la cellule.

Pour chaque station de base, et donc pour chaque polygone de Voronoï associé, les moyens de stockage de données 22 contiennent en outre une ou plusieurs variables caractéristiques du fonctionnement du réseau, chaque variable étant avantageusement connue à plusieurs instants successifs d'une même plage de temps, par exemple pour toutes les heures d'une journée.

Ces variables caractéristiques comportent par exemple des compteurs ou indicateurs de qualité de service, des paramètres logiques d'état, des paramètres de conception et des paramètres caractéristiques de la topologie du réseau.

Les indicateurs de qualité de service comportent par exemple le pourcentage d'appels manqués, c'est-à-dire le nombre d'appels émis depuis une station de base ou théoriquement reçus par une station de base et qui n'ont pu être établis.

En outre, parmi les variables caractéristiques figure le nombre d'appels depuis ou vers une station mobile établi dans chaque cellule au travers de la station de base par unité de temps.

Ces variables caractéristiques sont obtenues à partir de mesures faites par les stations de base et/ou les stations mobiles à intervalles réguliers, ces variables caractéristiques étant transmises au travers du réseau jusqu'aux moyens 22 de stockage de données.

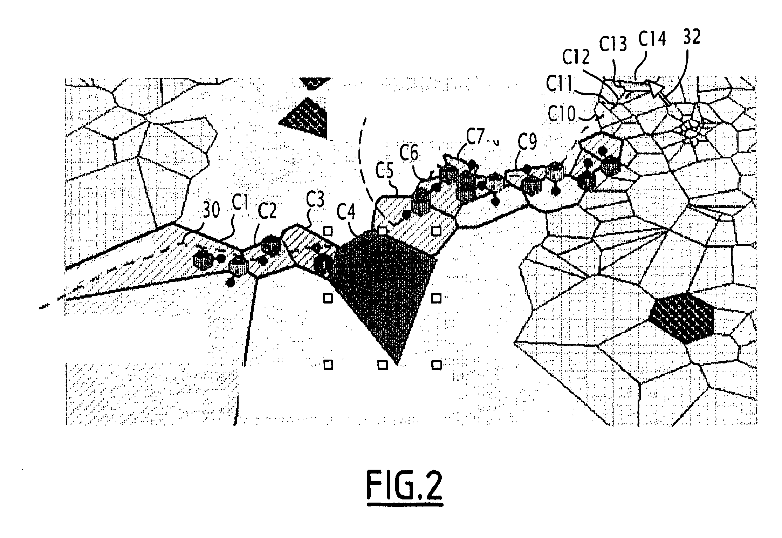

Comme illustré sur la Figure 2, la carte du réseau comporte le contour des polygones de Voronoï figurant chaque cellule, La surface de chaque cellule est emplie d'une trame caractéristique de la valeur d'une variable caractéristique du fonctionnement du réseau dans la cellule donnée.

De préférence, plusieurs variables caractéristiques d'une cellule sont illustrées sur la carte du réseau, par exemple à l'aide pour chaque cellule d'une combinaison de couleurs et de texture.

Les couleur et texture de chaque cellule évoluent au cours du temps en fonction des variations des valeurs caractéristiques associées.

L'interface homme/machine de la station de station 10 comporte des moyens pour la sélection sur la carte du réseau d'un tracé d'observation désigné par la référence 30 sur la figure 2. Ce tracé d'observation est désigné par exemple par « transect ».

Suivant un premier mode de réalisation, la station comporte des moyens pour réaliser ce tracé par déplacement d'un pointeur mobile 32 sur l'écran, lequel pointeur est guidé à partir de la souris 18.

Suivant un autre mode de mise en oeuvre, les moyens de sélection sont propres à sélectionner un tracé continu déjà existant sur la carte, tel que le tracé d'une ligne de chemin de fer, d'une route, d'un fleuve, ou encore une délimitation entre deux régions adjacentes de la carte.

Le tracé d'observation 30 est constitué d'une ligne continue cheminant successivement au travers de cellules adjacentes désignées par les références C1 à C14 sur l'exemple de la Figure 2. Ainsi, le tracé continu permet la définition d'une succession ordonnée de cellules adjacentes, ces cellules étant sélectionnées dans la mesure où le tracé d'observation pénètre dans le polygone de Voronoï associé à la cellule.

Outre les moyens d'affichage de la carte de la figure 2, la station de travail 10 comporte des moyens pour la mise à disposition de l'utilisateur, par exemple par affichage sur l'écran ou impression sur une feuille de papier, d'une représentation structurée par exemple graphique d'au moins une variable caractéristique pour les seules cellules adjacentes traversées par le tracé d'observation 30.

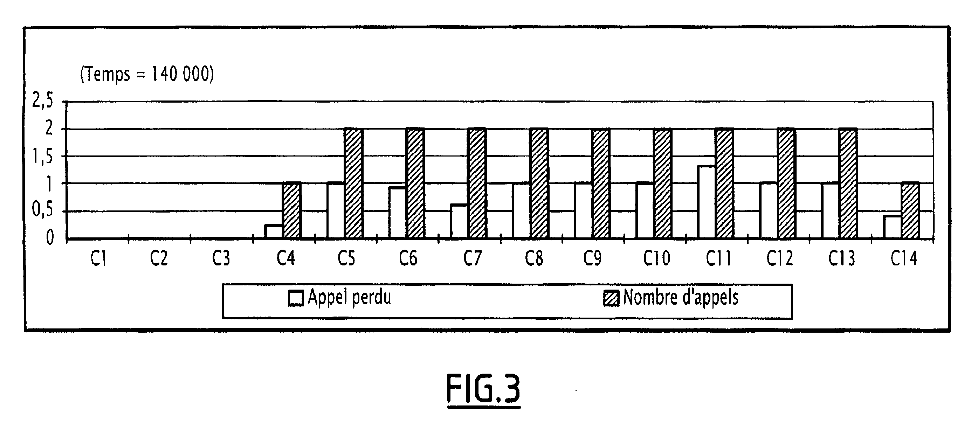

De préférence, et comme illustré sur la figure 3, la représentation structurée s'effectue sous la forme d'un histogramme présentant pour chaque cellule considérée, ici les cellules numérotées C1 à C14, les valeurs correspondant à une ou plusieurs variables caractéristiques de chaque cellule et ceci à un même instant donné.

Dans l'exemple considéré, l'histogramme représente à un instant donné pour chaque cellule C1 à C14 le nombre d'appels perdus, c'est-à-dire le nombre d'appels émis ou reçus depuis ou vers la station de base qui ont soient été interrompus, soit qui n'ont pu être établis. Le nombre d'appels perdus constitue une variable caractéristique représentative de la qualité de service rendu aux usagers.

De même, sur le même histogramme est représenté, pour chaque cellule, le nombre d'appels reçus ou émis depuis la cellule pendant une période prédéterminée.

De préférence, et dans la mesure où les moyens 22 de stockage de données comportent les variables caractéristiques pour chaque cellule à plusieurs instants successifs, la station de travail comporte des moyens pour à partir du même histogramme de la Figure 3, illustrer les variables caractéristiques de chacune des cellules aux différents instants successifs. Ces moyens sont par exemple adaptés pour assurer un affichage successif des histogrammes aux différents instants successifs en un même emplacement de l'écran et suivant la même représentation structurée.

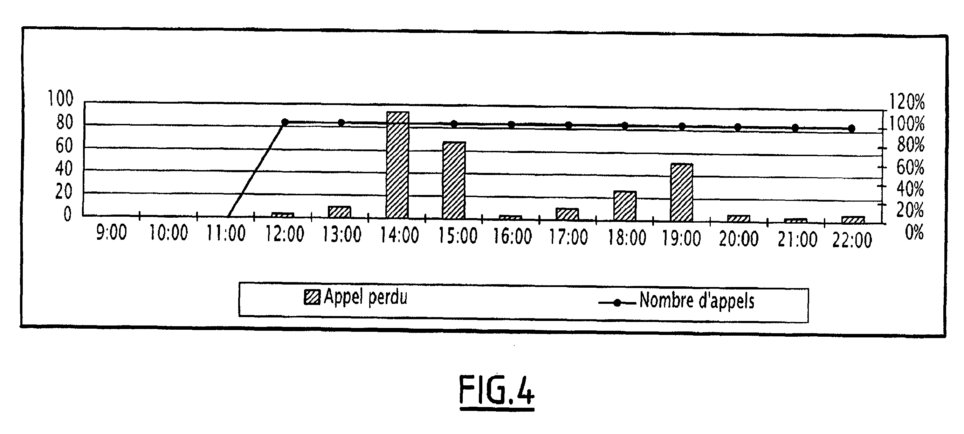

Par ailleurs, la station de travail comporte des moyens pour sélectionner, parmi les cellules figurant sur la carte illustrée sur la Figure 2, une cellule particulière et des moyens pour mettre à disposition de l'utilisateur un graphe tel qu'illustré sur la Figure 4 montrant pour la seule cellule sélectionnée l'évolution au cours du temps d'une ou plusieurs variables caractéristiques. Dans l'exemple, considéré, le graphique mis à disposition montre le nombre d'appels perdus pour chaque heure ainsi que le nombre d'appels reçus ou émis depuis la station de base pour chaque heure, ceci entre 09h00 et 22h00.

On constate qu'avec une telle station de base, il est possible d'analyser le fonctionnement d'un réseau de téléphonie mobile cellulaire à partir de l'état de fonctionnement de seulement certaines cellules adjacentes réparties suivant un tracé d'observation prédéterminé. Ainsi, la personne en charge de l'optimisation du réseau voit son travail facilité puisque seul un nombre réduit d'informations lui est fourni simultanément. De plus, ces informations correspondant à un tracé d'observation particulier, celles-ci peuvent être mises à profit pour tenir compte du fonctionnement particulier du réseau suivant une route, une voie ferrée, ou tout autre tracé du réseau.

## Revendications

1. Station de travail (10) pour l'analyse du fonctionnement d'un réseau de télécommunication mobile cellulaire comportant un ensemble de cellules, chaque cellule étant associée à une station de base propre à communiquer au moins avec une station mobile présente dans la cellule, la station comportant :
a) des moyens de recueil pour chaque cellule, d'au moins une variable caractéristique du fonctionnement du réseau dans ladite cellule,
b) des moyens de fourniture de la ou chaque variable caractéristique en association avec la cellule de recueil,
**caractérisé en ce que** les moyens de fourniture comportent :
b1) des moyens de sélection sur une carte du réseau figurée à partir desdites cellules, d'un tracé d'observation cheminant sur la carte au travers de cellules adjacentes ; et
b2) des moyens de mise à disposition, suivant une représentation structurée, de la ou chaque variable caractéristique pour les seules cellules adjacentes traversées par ledit tracé d'observation, suivant l'ordre du tracé.
et **en ce que** les moyens de recueil comportent des moyens d'échantillonnage au cours du temps de la ou chaque variable caractéristique, et **en ce que** lies moyens de mise à disposition comportent des moyens de mises à disposition successives suivant une même représentation structurée de la ou chaque variable caractéristique à des instants d'échantillonnage successifs.

2. Station de travail selon la revendication 1, **caractérisé en ce que** chaque cellule est un polygone issu d'un polygone de Voronoï défini comme la représentation dans l'espace dual de la partition de la zone de couverture du réseau par une triangulation de Delaunay effectuée à partir de l'implantation des stations de base.

3. Station de travail selon la revendication 1 ou 2. **caractérisé en ce que** pour chaque cellule, au moins deux variables caractéristiques sont recueillies et mises à disposition simultanément dans la même représentation structurée.

4. Station de travail selon l'une quelconque des revendications précédentes, **caractérisé en ce que** ladite représentation structurée comporte un graphique bidimensionnel, dont une des dimensions est représentative des cellules adjacentes dudit tracé et dont l'autre dimension est représentative de la ou chaque variable caractéristique.

5. Station de travail selon la revendication 4, **caractérisé en ce que** ladite représentation structurée est un histogramme.

6. Station de travail selon l'une quelconque des revendications précédentes, **caractérisé en ce que** les moyens de recueil comportent des moyens d'échantillonnage au cours du temps de la ou chaque variable caractéristique, et **en ce qu'**elle comporte des moyens de sélection d'une unique cellule d'analyse et des moyens de mise à disposition de l'évolution au cours du temps, suivant une représentation structurée, d'au moins une variable caractéristique pour la seule cellule d'analyse sélectionnée.

7. Produit programme d'ordinateur pour une station de travail comportant des moyens de mise à disposition d'informations comportant un jeu d'instructions pour l'exécution des étapes d'un procédé d'analyse du fonctionnement d'un réseau de télécommunication mobile cellulaire comportant un ensemble de cellules, chaque cellule étant associée à une station de base propre à communiquer au moins avec une station mobile présente dans la cellule,, lorsque ledit programme est exécuté par une station de travail, ledit procédé comportant :
a) le recueil pour chaque cellule, d'au moins une variable caractéristique du fonctionnement du réseau dans ladite cellule,
b) la fourniture de la ou chaque variable caractéristique en association avec la cellule de recueil,
**caractérisé en ce que** l'étape de fourniture comporte :
b1) la sélection sur une carte du réseau figurée à partir desdites cellules, d'un tracé d'observation cheminant sur la carte au travers de cellules adjacentes ; et
b2) la mise à disposition, suivant une représentation structurée, de la ou chaque variable caractéristique pour les seules cellules adjacentes traversées par ledit tracé d'observation, suivant l'ordre du tracé.
et **en ce que** l'étape de recueil comporte une étape d'échantillonnage au cours du temps de la ou chaque variable caractéristique, et **en ce que** l'étape de mise à disposition comporte une étape de mises à disposition successives suivant une même représentation structurée de la ou chaque variable caractéristique à des instants d'échantillonnage successifs.

8. Produit programme d'ordinateur selon la revendication 7, **caractérisé en ce que** chaque cellule est un polygone issu d'un polygone de Voronoï défini comme la représentation dans l'espace dual de la partition de la zone de couverture du réseau par une triangulation de Delaunay effectuée à partir de l'implantation des stations de base.

9. Produit programme d'ordinateur selon la revendication 7 ou 8, **caractérisé en ce que** pour chaque cellule, au moins deux variables caractéristiques sont recueillies et mises à disposition simultanément dans la même représentation structurée.

10. Produit programme d'ordinateur selon l'une quelconque des revendications précédentes, **caractérisé en ce que** ladite représentation structurée comporte un graphique bidimensionnel, dont une des dimensions est représentative des cellules adjacentes dudit tracé et dont l'autre dimension est représentative de la ou chaque variable caractéristique.

11. Produit programme d'ordinateur selon la revendication 10, **caractérisé en ce que** ladite représentation structurée est un histogramme.

12. Produit programme d'ordinateur selon l'une quelconque des revendications précédentes, **caractérisé en ce que** l'étape de recueil comporte une étape d'échantillonnage au cours du temps de la ou chaque variable caractéristique, et **en ce qu'**il comporte une étape de sélection d'une unique cellule d'analyse et une étape de mise à disposition de l'évolution au cours du temps, suivant une représentation structurée, d'au moins une variable caractéristique pour la seule cellule d'analyse sélectionnée.

## Claims

1. A workstation for analyzing the operation of a telecommunications network comprising a set of cells each associated with a base station adapted to communicate with a mobile station present in the cell, the workstation comprising
a) collector means for collecting, for each cell, one or more variables characteristic of the operation of the network in said cell; and
b) supply means for supplying the characteristic variable(s) in association with the collection cell,
the workstation being **characterized in that** the supply means comprise
b1) means for selecting on a map of the network based on said cells an observation line passing over the map across adjacent cells; and
b2) means for making available a structured representation of the characteristic variable(s) for only the adjacent cells crossed by said observation line, in the order in which they are encountered along said line, and **in that** the collector means comprise means for sampling the characteristic variable(s) over time and **in that** the means for making available comprise means for successively making available the same structured representation of the characteristic variable(s) at successive sampling times.

2. A workstation according to claim 1, **characterized in that** each cell is a polygon derived from a Voronoi diagram, defined as a representation in dual space of the decomposition of the coverage area of the network by Delaunay triangulation based on the layout of the base stations.

3. A workstation according to claim 1 or 2, **characterized in that** for each cell, at least two characteristic variables are collected and made available simultaneously in the same structured representation.

4. A workstation according to any one of the preceding claims, **characterized in that** said structured representation comprises a two-dimensional graph, one of the dimensions of which is representative of the cells adjacent to said line, and the other dimension of which is representative of the characteristic variable(s).

5. A workstation according to claim 4, **characterized in that** said structured representation is a histogram.

6. A workstation according to any one of the preceding claims, **characterized in that** the collector means comprise means for sampling the characteristic varable(s) over time, and **in that** it comprises means for selecting a single analysis cell and means for making available the characteristic variable(s)'s change over time, shown as a structured representation, only for the selected analysis cell.

7. A computer program product for a workstation that comprises means for making available information comprising a set of instructions for executing the steps of a method for analyzing the operation of a cellular mobile telecommunications network comprising a set of cells each associated with a base station adapted to communicate with a mobile station present in the cell when said program is executed by a workstation, the method comprising
a) for each cell, collecting one or more variables characteristic of the operation of the network in said cell,
b) supplying the characteristic variable(s) associated with the collection cell,
**characterized in that** the step of supplying comprises
b1) selecting on a map of the network based on said cells an observation line passing over the map across adjacent cells
b2) making available a structured representation of the characteristic variable(s) for only the adjacent cells crossed by said observation line, in the order in which they are encountered along said line, and **in that** the step of collecting comprise a step of sampling the characteristic variable(s) over time and **in that** the step of making available comprises a step of successively making available the same structured representation of the characteristic variable(s) at successive sampling times.

8. A computer program product according to claim 7, **characterized in that** each cell is a polygon derived from a Voronoi diagram, defined as a representation in dual space of the decomposition of the coverage area of the network by Delaunay triangulation based on the layout of the base stations.

9. A computer program product according to claim 7 or 8, **characterized in that** for each cell, at least two characteristic variables are collected and made available simultaneously in the same structured representation.

10. A computer program product according to any one of the preceding claims, **characterized in that** said structured representation comprises a two-dimensional graph, one of the dimensions of which is representative of the cells adjacent to said line, and the other dimension of which is representative of the characteristic variable(s).

11. A computer program product according to claim 10, **characterized in that** structured representation is a histogram.

12. A computer program product according to any one of the preceding claim, **characterized in that** the step of collecting comprise a step of sampling the characteristic variable(s) over time, and **in that** it comprises a step of successively selecting a single analysis cell and a step making available comprises a step of successively making available the same structured representation of the characteristic variable(s) at successive sampling times.

## Patentansprüche

1. Arbeitsstation (10) zur Analyse des Betriebs eines zellularen Mobilkommunikationsnetzwerks mit einer Anordnung von Zellen, wobei jede Zelle einer Basisstation zugeordnet ist, welche fähig ist, mindestens mit einer sich in der Zelle aufhaltenden Mobilstation zu kommunizieren, wobei die Station umfasst:
a) Mittel zur Erfassung, für jede Zelle, mindestens einer für den Betrieb des Netzwerks in der besagten Zelle charakteristischen Variablen,
b) Mittel zur Bereitstellung der oder einer jeden charakteristischen Variablen in Verbindung mit der Erfassungszelle,
**dadurch gekennzeichnet, dass** die Mittel zur Bereitstellung umfassen:
b1) Mittel zur Auswahl, auf einer Karte des ausgehend von den besagten Zellen dargestellten Netzwerks, eines Beobachtungsverlaufs, der sich auf der Karte durch angrenzende Zellen hindurcherstreckt; und
b2) Mittel zur Zurverfügungstellung, gemäß einer strukturierten Darstellung, der oder einer jeden charakteristischen Variablen für nur die diejenigen angrenzenden Zellen, durch welche sicher der besagte Beobachtungsverlauf erstreckt, gemäß der Reihenfolge des Verlaufs,
und dass die Erfassungsmittel Mittel zum Abtasten im Laufe der Zeit der oder jeder charakteristischen Variablen aufweisen, und dass die Mittel zur Zurverfügungstellung Mittel für sukzessive Zurverfügungstellungen gemäß einer selben strukturierten Darstellung der oder jeder charakteristischen Variablen zu sukzessiven Abtastzeitpunkten aufweisen.

2. Arbeitsstation nach Anspruch 1, **dadurch gekennzeichnet, dass** jede Zelle ein aus einem Voronoi-Polygon hervorgehendes Polygon, definiert wie die Darstellung im dualen Raum des Teilbereichs des Abdeckungsgebiets des Netzwerks anhand einer ausgehend vom Standort der Basisstation durchgeführten Delaunay-Triangulation, ist.

3. Arbeitsstation nach Anspruch 1 oder 2, **dadurch gekennzeichnet, dass**, für jede Zelle, mindestens zwei charakteristische Variablen erfasst und simultan in derselben strukturierten Darstellung zur Verfugung gestellt werden.

4. Arbeitsstation nach einem beliebigen der vorstehenden Ansprüche, **dadurch gekennzeichnet, dass** die besagte strukturierte Darstellung eine zweidimensionale Graphik aufweist, dessen eine Dimension für die angrenzenden Zellen des besagten Verlaufs repräsentativ ist, und dessen andere Dimension für die oder jede charakteristische Variable repräsentativ ist.

5. Arbeitsstation nach Anspruch 4, **dadurch gekennzeichnet, dass** die besagte strukturierte Darstellung ein Histogramm ist.

6. Arbeitsstation nach einem beliebigen der vorstehenden Ansprüche, **dadurch gekennzeichnet, dass** die Erfassungsmittel Mittel zum Abtasten, im Laufe der Zeit der oder jeder charakteristischen Variablen, aufweisen, und dass sie Mittel zur Auswahl einer einzelnen Analysezelle und Mittel zur Zurverfügungstellung der Evolution im Laufe der Zeit, gemäß einer strukturierten Darstellung, mindestens einer charakteristischen Variablen für die einzelne ausgewählte Analysezelle aufweist.

7. Computerprogramm-Produkt für eine Arbeitsstation, umfassend Mittel zur Zurverfügungstellung von Informationen, welche einen Satz von Befehlen zur Durchführung der Schritte eines Verfahrens zur Analyse des Betriebs eines zellularen Mobilkommunikationsnetzwerks mit einer Anordnung von Zellen enthalten, wobei jede Zelle einer Basisstation zugeordnet ist, welche fähig ist, mit mindestens einer sich in der Zelle aufhebenden Mobilstation zu kommunizieren, wenn das besagte Programm von einer Arbeitsstation ausgeführt wird, wobei das besagte Verfahren umfasst:
a) Das Erfassen, für jede Zelle, mindestens einer für den Betrieb des Netzwerks in der besagten Zelle charakteristischen Variablen,
b) Das Bereitstellen der oder einer jeden charakteristischen Variablen in Verbindung mit der Erfassungszelle,
**dadurch gekennzeichnet, dass** der Schritt des Bereitstellens umfasst:
b1) Die Auswahl, auf einer Karte des ausgehend von den besagten Zellen dargestellten Netzwerks, eines Beobachtungsverlaufs, der sich auf der Karte durch angrenzende Zellen hindurcherstreckt; und
b2) die Zurverfügungstellung, gemäß einer strukturierten Darstellung, der oder einer jeden charakteristischen Variablen für nur die diejenigen angrenzenden Zellen, durch welche sicher der besagte Beobachtungsverlauf erstreckt, gemäß der Reihenfolge des Verlaufs,
und dass der Schritt des Erfassens einen Schritt des Abtastens im Laufe der Zeit der oder jeder charakteristischen Variablen umfasst, und dass der Schritt der Zurverfugungstellung einen Schritt von sukzessiven Zurverfügungstellungen gemäß einer selben strukturierten Darstellung der oder jeder charakteristischen Variablen zu sukzessiven Abtastzeitpunkten umfasst.

8. Computerprogramm-Produkt nach Anspruch 7, **dadurch gekennzeichnet, dass** jede Zelle ein aus einem Voronoi-Polygon hervorgehendes Polygon, definiert wie die Darstellung im dualen Raum des Teilbereichs des Abdeckungsgebiets des Netzwerks anhand einer ausgehend vom Standort der Basisstation durchgeführten Delaunay-Triangulation, ist.

9. Computerprogramm-Produkt nach Anspruch 7 oder 8, **dadurch gekennzeichnet, dass** für jede Zelle mindestens zwei charakteristische Variablen erfasst und simultan in derselben strukturierten Darstellung zur Verfügung gestellt werden.

10. Computerprogramm-Produkt nach einem beliebigen der vorstehenden Ansprüche, **dadurch gekennzeichnet, dass** die besagte strukturierte Darstellung eine zweidimensionale Graphik aufweist, deren eine Dimension für die angrenzenden Zellen des besagten Verlaufs repräsentativ ist, und deren andere Dimension für die oder jede charakteristische Variable repräsentativ ist.

11. Computerprogramm-Produkt nach Anspruch 10, **dadurch gekennzeichnet, dass** die besagte strukturierte Darstellung ein Histogramm ist.

12. Computerprogramm-Produkt nach einem beliebigen der vorstehenden Ansprüche, **dadurch gekennzeichnet, dass** der Schritt des Erfassens einen Schritt des Abtastend im Laufe der Zeit der oder jeder charakteristischen Variablen umfasst, und dass es einen Schritt des Auswählens einer einzelnen Analysezelle und einen Schritt des Zurverfügungstellungs der Evolution im Laufe der Zeit, gemäß einer strukturierten Darstellung, mindestens einer charakteristischen Variablen für die einzelne ausgewählte Analysezelle umfasst.
